# FASCICULE DE BREVET EUROPEEN

(11) **EP 3 307 506 B1**
(45) Date de publication et mention de la délivrance du brevet: **15.07.2020**
(21) Numéro de dépôt: 16741658.5
(22) Date de dépôt: 13.06.2016
(51) Int. Cl.: B29B 11/16, B29C 70/38

(54) **INSTALLATION DE RÉALISATION DE PRÉFORMES COMPOSITES THERMOPLASTIQUES**
EINHEIT ZUR HERSTELLUNG VON THERMOPLASTISCHEN VERBUNDVORFORMEN
UNIT FOR THE PRODUCTION OF THERMOPLASTIC COMPOSITE PREFORMS

(30) Priorité: 12.06.2015 FR 1555399
(43) Date de publication de la demande: 18.04.2018
(73) Titulaire: Centre Technique Des Industries Mecaniques, 60300 Senlis (FR)
(72) Inventeur: CALLENS, Clément, 44850 Ligné (FR); BORDELLIER, Franck, 44980 Sainte-Luce-sur-Loire (FR); CAPON, Philippe, 71100 Châlon-sur-Saône (FR)
(74) Mandataire: Fédit-Loriot
(86) Numéro de dépôt international: PCT/FR2016/051429
(87) Numéro de publication internationale: WO 2016/198813

(56) Documents cités:
- EP-A1- 1 990 169
- DE-A1-102011 054 650
- DE-A1-102012 111 761

## Description

La présente invention se rapporte à une installation de réalisation de préformes composites thermoplastiques.

Un domaine d'application envisagé est notamment, mais non exclusivement, celui de la réalisation de pièces composites pour l'automobile, aisément recyclables.

Des installations connues permettent de réaliser des préformes composites à partir de bandes en matériau composite thermoplastique. Les bandes sont constituées d'une matrice en matériau polymère thermoplastique et elles incluent des fibres de renfort noyées dans le matériau polymère. Ces bandes sont stockées en rouleau au voisinage d'un support mobile, sur lequel on vient successivement appliquer et souder entre elles, suivant différentes orientations, des portions de bande. On met en œuvre par exemple, deux bandes de natures différentes respectivement enroulées sur deux bobines. Après chaque application d'une bande, on peut entraîner en mouvement de rotation le support mobile, de manière à pouvoir appliquer la bande suivante selon une autre direction.

Ainsi, en superposant une pluralité de bandes, on réalise des préformes suivants deux dimensions, avec des zones de renfort prédéfinies. Ces préformes peuvent être ensuite thermoformées dans une presse prévue à cet effet.

On pourra se référer au document WO2013/016487, lequel décrit une telle installation.

On observera que la réalisation de chaque préforme nécessite de mettre en œuvre un grand nombre de bandes, et partant, est relativement long. De plus, l'installation ne permet pas de réaliser plus d'une seule préforme à la fois. Et, la productivité est faible. [A]

Aussi, un problème qui se pose et que vise à résoudre la présente invention est de fournir une installation de réalisation de préformes composites thermoplastiques plus productive.
A : Le document DE 10 2011 054650 décrit une installation automatisée de réalisation de préforme aboutissant à une productivité médiocre.

Dans ce but, il est proposé une installation de réalisation de préformes composites thermoplastiques destinées à être thermoformées, ladite installation comprenant, d'une part un support mobile et une pluralité de magasins de stockage situés au voisinage dudit support mobile pour pouvoir stocker respectivement une pluralité d'éléments structurels en matériau composite thermoplastique, et d'autre part, des dispositifs de transfert et de liaison pour pouvoir transférer lesdits éléments structurels respectivement des magasins de stockage de ladite pluralité de magasins de stockage vers ledit support mobile et pour pouvoir lier ensemble lesdits éléments structurels sur ledit support mobile de manière à réaliser une préforme. Ledit support mobile est entrainé séquentiellement en translation selon une direction de cheminement, tandis que lesdits magasins de stockage sont agencés latéralement par rapport audit support mobile, et lesdits dispositifs de transfert et de liaison transfèrent séquentiellement lesdits éléments structurels sur ledit support mobile selon une direction de transfert sensiblement perpendiculaire à ladite direction de cheminement.

Ainsi, une caractéristique de l'invention réside dans la mise en œuvre du support mobile, lequel est entraîné en translation dans la seule direction de cheminement. Aussi, les magasins de stockage étant agencés latéralement, de chaque côté du support mobile, les dispositifs de transfert et de liaison viennent prendre les éléments structurels respectivement dans les magasins de stockage pour les entraîner en translation, selon une direction perpendiculaire à la direction de cheminement sur le support mobile. Le support mobile est entraîné en translation séquentiellement, autrement dit, par intermittence, afin que les éléments structurels puissent être liés ensemble sur le support. De la sorte, des éléments structurels complémentaires vont pouvoir être ajustés au fur et à mesure de l'avancement du support mobile. Aussi, la forme des différents éléments structurels aptes à être assemblés sera prédéfinie en amont, en fonction de la préforme souhaitée et partant, de la pièce composite à réaliser. Conséquemment, contrairement à l'art antérieur, où l'on vient superposer des bandes standard, on minimise ici le nombre d'éléments structurels à assembler.

Au surplus, plusieurs préformes vont pouvoir être assemblés simultanément et progressivement sur le support mobile entre un début et une fin. Le support mobile comprend par exemple un tapis roulant, comme on l'expliquera ci-après plus en détail. Grâce à ces caractéristiques, on améliore considérablement la productivité.

Selon l'invention, lesdits magasins de stockage sont appariés, les magasins de chacune des paires de magasins étant opposés l'un de l'autre par rapport audit support mobile. Ainsi qu'on l'expliquera ci-après, cette disposition des magasins de stockage par rapport au support mobile permet une meilleure efficacité des transferts d'éléments structurels.

En outre, lesdits dispositifs de transfert et de liaison comportent, avantageusement, une pluralité d'organes de préhension desdits éléments structurels. Aussi, à chaque magasin de stockage est associé un organe de préhension. Préférentiellement, les organes de préhension comprennent respectivement une cloche à dépression. De la sorte, on vient porter la cloche à dépression contre les éléments structurels de manière à pouvoir les saisir et les transférer vers le support mobile. Pour les relâcher, il suffit de mettre la cloche à l'air libre comme on l'expliquera ci-après. Selon une variante de réalisation, on met la cloche en surpression, de manière à en libérer plus aisément les éléments structurels.

De plus, lesdits dispositifs de transfert et de liaison comportent une pluralité d'organes de soudage pour lier ensemble lesdits éléments structurels. Préférentiellement, les organes de soudage sont installés à travers la cloche à dépression. De la sorte, lorsque l'on vient ajuster un élément structurel sur un autre, sans le relâcher on vient le souder sur ledit autre élément structurel. Partant, les éléments structurels sont ajustés et liés ensemble les uns sur les autres de manière précise. Selon une autre variante que l'on décrira plus en détail dans la suite de la description, les organes de soudage sont contigus à la cloche à dépression.

Selon un mode de réalisation de l'invention particulièrement avantageux, les organes de soudage comprennent un transducteur et une sonotrode. De la sorte, on vient souder ensemble des éléments structurels par ultrasons. Ce procédé consiste à venir porter en fusion localement le matériau thermoplastique des éléments structurels afin qu'ils se soudent.

Aussi, lesdits dispositifs de transfert et de liaison comportent, en outre, de manière avantageuse, des chariots de transfert mobiles en translation selon ladite direction de transfert, pour pouvoir transférer lesdits éléments structurels. Les chariots de transfert sont engagés dans des glissières transversales permettant un mouvement de translation avec peu de frottement et par conséquent, rapide. À chaque magasin de stockage est associé un chariot de transfert. De plus, lesdits dispositifs de transfert et de liaison comportent en outre un système bielle/manivelle pour pouvoir entraîner lesdits chariots de transfert en translation. Grâce au système bielle/manivelle, on transforme un mouvement de rotation en mouvement de translation permettant de mouvoir les chariots de transfert à grande vitesse. Aussi, ce système permet d'obtenir une accélération progressive et contrôlée des chariots, tant au départ qu'à l'arrivée.

Selon l'invention, lesdits chariots de transfert sont liés mécaniquement deux à deux. Les chariots de transfert de deux magasins de stockage opposés l'un de l'autre par rapport au support mobile sont ainsi liés mécaniquement entre eux, de sorte que, lorsque l'un des chariots de transfert est entraîné vers l'un des magasins de stockage, l'autre chariot de transfert est simultanément entraîné de l'autre magasin de stockage vers le support mobile. De la sorte, on diminue les temps morts et les mouvements inutiles des dispositifs de transfert. On améliore ainsi la productivité de réalisation des préformes en matériau composite.

De plus, l'installation selon l'invention comprend des bras respectivement installés sur lesdits chariots de transfert. Les organes de préhension et les organes de soudage sont respectivement installés à l'extrémité des bras comme on l'expliquera plus en détail ci-après.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est une vue schématique partielle de dessus d'une installation de réalisation de préformes composites thermoplastiques selon l'invention ;
- la Figure 2 est une vue schématique de face selon la flèche II représentée sur la Figure 1 montrant une unité de travail ; et,
- la Figure 3 est un organigramme montrant les phases successives de mise en œuvre de l'installation de réalisation objet de l'invention.

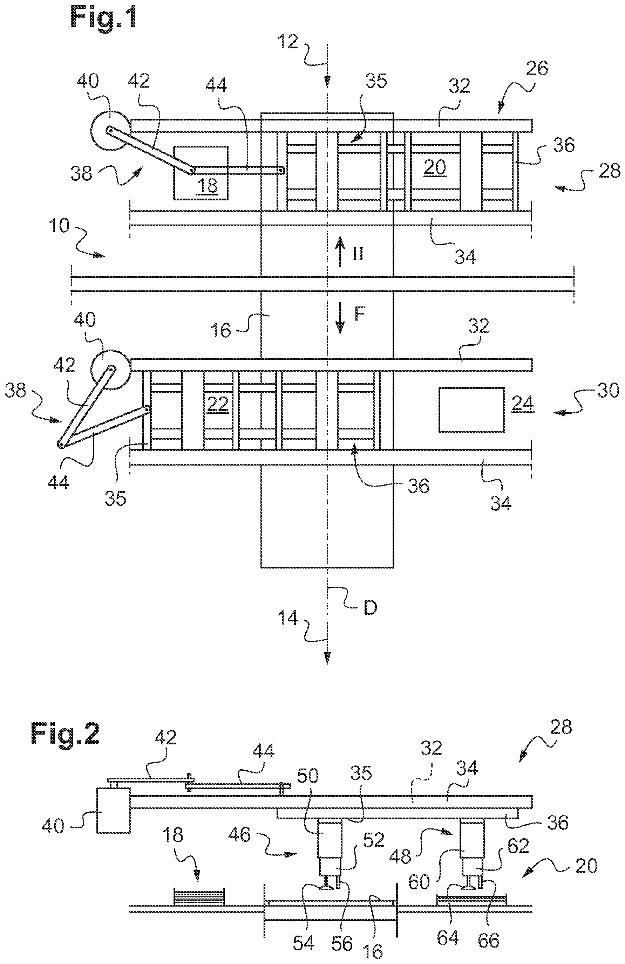

La Figure 1 illustre en vue de dessus une installation 10 permettant de réaliser des préformes composites thermoplastiques. Elle présente une entrée 12 et à l'opposé une sortie 14. Un tapis roulant 16 s'étend entre l'entrée 12 et la sortie 14 et il forme un support mobile destiné à être entraîné en translation de l'entrée 12 vers la sortie 14 selon la flèche F. Il définit ainsi une direction de cheminement D. L'installation 10 présente latéralement, des magasins de stockage 18, 20, 22, 24 agencés latéralement de chaque côté du tapis roulant 16 et en vis-à-vis deux à deux. Les magasins de stockage 18, 20, 22, 24 sont destinés à pouvoir stocker des éléments structurels en matériau composite thermoplastique. Ces éléments structurels ont été préalablement pultrudés et découpés. Ils peuvent être de différentes natures. Ils sont par exemple réalisés en polypropylène ou bien en polyamide et ils sont renforcés par exemple avec des fibres de verre ou des fibres de carbone. Ils peuvent également présenter des épaisseurs différentes. Chaque magasin de stockage est ainsi apte à stocker des éléments structurels d'une même forme prédéfinie et d'une même structure, empilés les uns sur les autres. D'autres types de magasins sont envisageables permettant par exemple des chargements en temps masqué.

Ainsi, les deux premiers magasins de stockage, l'un droite 18, l'autre gauche 20, sont sensiblement symétriques l'un de l'autre par rapport au tapis roulant 16, et les deux deuxièmes magasins de stockage, l'un droite 22, l'autre gauche 24, sont également symétriques l'un de l'autre par rapport au tapis roulant 16. En outre, le premier magasin de stockage droite 18 contient des premiers premiers éléments structurels et le premier magasin de stockage gauche 20 contient des premiers seconds éléments structurels, tandis que le deuxième magasin de stockage droite 22 contient des deuxièmes premiers éléments structurels et le deuxième magasin de stockage gauche 24 contient des deuxièmes seconds éléments structurels.

On observera que seules deux paires de magasins de stockage 18, 20 ; 22, 24 sont représentées sur la Figure 1, mais qu'une pluralité de paires de magasins de stockage pourraient être distribuées de la même façon entre les deux premiers magasins de stockage 18, 20 et les deux deuxièmes magasins de stockage 22, 24.

Au-dessus du tapis roulant 16 et des magasins de stockage 18, 20 ; 22, 24 est installé un portique 26 divisé en station de travail, une première station de travail 28, et une deuxième station de travail 30. Les stations de travail 28, 30 viennent s'étendre respectivement au-dessus du tapis roulant 16 et des deux paires de magasins de stockage 18, 20 ; 22, 24. Le portique 26 présente pour chacune des stations de travail 28, 30, une paire de traverses supérieures parallèles 32, 34 s'étendant sensiblement perpendiculairement à la direction de cheminement D et au tapis roulant 16. Chacune des paires de traverses 32, 34 reçoit deux chariots de transfert, l'un proximal 35, et l'autre distal 36 couplés mécaniquement ensemble dans le prolongement l'un de l'autre et montés mobiles en translation entre les traverses 32, 34. Les chariots de transfert 35, 36 sont animés en mouvement de translation, de manière séquentielle au moyen d'un système bielle/manivelle 38 comprenant une motorisation 40 destinée à entraîner en pivotement une manivelle 42, laquelle est reliée à l'un des chariots de transfert, le chariot de transfert proximal 35, par l'intermédiaire d'une bielle 44.

On retrouve sur la Figure 2, en vue de face avant, la première station de travail 28. On retrouve les chariots de transfert 35, 36 couplés et montés mobiles en translation entre les traverses supérieures parallèles 32, 34 ; la motorisation 40 et l'ensemble bielle 44, manivelle 42, reliant le chariot de transfert proximal 35 à la motorisation 40.

On retrouve également, le tapis roulant 16, et latéralement, les deux premiers magasins de stockage 18, 20, opposés l'un de l'autre par rapport au tapis roulant 16.

Le chariot de transfert proximal 35 est équipé d'un bras télescopique proximal 46, tandis que le chariot de transfert distal 36 est équipé d'un bras télescopique distal 48. Les bras télescopiques 46, 48 s'étendent sensiblement perpendiculairement des chariots de transfert respectifs 35, 36, et respectivement vers le tapis roulant 16, et vers le premier magasin de stockage gauche 20.

Le bras télescopique proximal 46 présente un corps proximal 50 et une tige proximale 52 montée à coulissement dans le corps proximal 50. L'extrémité libre de la tige proximale 52 est équipée d'une cloche à dépression proximale 54, et d'une sonotrode proximale 56 contiguë. Parallèlement, le bras télescopique distal 48 présente un corps distal 60 et une tige distale 62 montée à coulissement dans le corps distal 60. L'extrémité libre de la tige distale 62 est équipée d'une cloche à dépression distale 64, formant un organe de préhension, et d'une sonotrode distale 66 contiguë, formant un organe de soudage. On observera qu'une cloche à dépression permet de saisir des objets pour les entraîner en mouvement, et en l'espèce il s'agira de saisir des éléments structurels en matériau composite thermoplastique. Pour ce faire, la cloche est appliquée de manière hermétique contre la face plane de l'élément structurel et une dépression est crée à l'intérieur de la cloche afin de la solidariser à l'élément structurel. Pour libérer ce dernier, la cloche est alors dépressurisée, c'est-à-dire, mise à la pression atmosphérique, ou bien encore pressurisée pour une meilleure efficacité. Quant à la sonotrode, elle est associée à un transducteur non représenté et elle permet de ramollir et de fondre localement l'élément structurel au moyen d'une onde mécanique ultrasonore générée par le transducteur.

Selon une autre variante de réalisation de l'invention non représentée, la sonotrode est située à l'intérieur de la cloche à dépression de manière à améliorer la compacité de l'organe de préhension et de l'organe de soudage à l'extrémité libre de la tige du bras télescopique. Selon encore une autre variante de réalisation de l'invention, non représentée, la sonotrode occupe une position centrale à l'extrémité libre de la tige et deux cloches à dépression sont installées dans une position diamétralement opposée par rapport à la sonotrode. Partant, on obtient une meilleure saisie de l'élément structurel comme on l'expliquera ci-après.

La deuxième station de travail 30 représentée sur la Figure 1 est ici identique à la première 28.

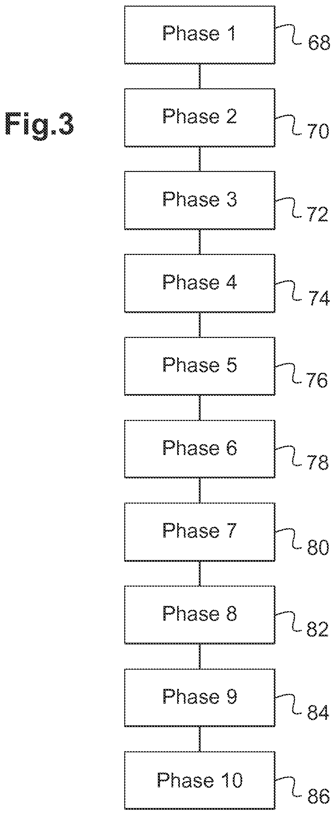

On décrira à présent un cycle de fonctionnement de l'installation conforme à l'invention, en référence à la Figure 3, dans un cas simple où la préforme composite comporte quatre éléments structurels liés ensemble, les quatre éléments structurels étant respectivement stockés initialement dans les magasins de stockage 18, 20 ; 22, 24.

On décrira ce cycle de fonctionnement aussi en référence aux Figures 1 et 2.

La première station de travail 28 étant dans un état initial tel que représenté sur les Figures 1 et 2, selon une première phase 68 de saisie, décomposée en trois étapes, le bras télescopique distal 48 est activé de sorte que la tige distale 62 est entraînée en extension pour venir appliquer la cloche à dépression distale 64 contre un premier premier élément structurel du premier magasin de stockage gauche 20. La cloche à dépression distale 64 est alors portée en dépression, puis la tige distale 62 est rétractée de manière à saisir le premier premier élément structurel.

Dans une deuxième phase 70, la motorisation 40 de la première station de travail 28 est mise en œuvre, pour aboutir à un état identique à celui de la deuxième station de travail 30 représenté sur la Figure 1. De la sorte, en revenant sur la Figure 2, le premier premier élément structurel est porté au-dessus du tapis roulant 16, tandis que la cloche à dépression proximale 54 du bras télescopique proximal 46 est portée, elle, au-dessus du premier magasin de stockage droite 18.

Ensuite, dans une troisième phase 72 incluant deux étapes simultanées, l'une de dépose l'autre de saisie, elles-mêmes décomposées en sous étapes, le premier premier élément structurel est déposé sur le tapis roulant 16 et pour ce faire, la tige distale 62 est entraînée en extension, puis la cloche à dépression distale 64 est mise à la pression atmosphérique et ensuite la tige distale 62 est rétractée, tandis que la tige proximale 52 est entraînée en extension pour venir appliquer la cloche à dépression proximale 54 contre un premier second élément structurel du premier magasin de stockage droite 18, puis la cloche à dépression 54 est mise en dépression et la tige proximale 52 est alors rétractée pour pouvoir saisir le premier second élément structurel.

Selon une variante d'exécution, un élément structurel de base est déjà porté sur le tapis roulant 16 à l'aplomb du bras télescopique distal 48 portant le premier premier élément structurel. Aussi, le premier premier élément structurel est déposé, au moins en partie sur l'élément structurel de base dans une position prédéfinie, et la sonotrode distale 66 vient en appui contre le premier premier élément structurel, et elle est mise en œuvre pour souder localement le premier premier élément structurel et l'élément structurel de base.

Dans une quatrième phase 74, la motorisation 40 de la première station de travail 28 est à nouveau mise en œuvre, pour porter les chariots de transfert 35, 36 dans leur état initial, tel que représenté sur la Figure 2. Le premier second élément structurel est alors porté au droit du premier premier élément structurel déposé sur le tapis roulant 16 selon une orientation et une position relative prédéfinie, tandis que la cloche à dépression distale 64 du bras télescopique distal 48 revient au-dessus du premier magasin de stockage gauche 20.

Puis dans une cinquième phase 76 incluant également deux étapes simultanées, l'une de dépose et de fixation, l'autre de saisie, toutes deux décomposées en sous étapes, le premier second élément structurel est d'une part appliqué sur le premier premier élément structurel, dans une position relative prédéfinie, grâce à la tige proximale 52 qui est entraînée en extension, et de surcroît, simultanément, la sonotrode proximale 56 qui vient en appui contre le premier second élément structurel, est mise en œuvre pour souder localement le premier premier élément structurel et le premier second élément structurel. Préférentiellement, un dispositif presseur à ressorts permet de maintenir en pression l'élément structurel durant la soudure. Puis la cloche à dépression proximale 54 est dépressurisée tandis que la tige proximale 52 est rétractée. Parallèlement, la tige distale 62 a été entraînée en extension puis rétractée pour venir saisir un autre premier premier élément structurel comme décrit dans la première phase 68 de saisie.

Dans une sixième phase 78, le tapis roulant 16 est alors entraîné en translation selon la direction de cheminement D, et d'un pas donné, de manière à venir porter les deux premiers éléments structurels solidaires l'un de l'autre, à l'aplomb des deux chariots de transfert 35, 36 de la deuxième station de travail 30.

Avant le déroulement de la sixième phase 78, et durant la période de mise en œuvre de la première station de travail 28 jusqu'à la cinquième phase 76, la deuxième station de travail 30 a été mise en œuvre parallèlement conformément aux première 68 et deuxième phases 70.

Partant, le bras télescopique distal 48 du chariot distal 36 de la deuxième station 30 a été activé de manière à saisir le deuxième premier élément structurel contenu dans le deuxième magasin de stockage gauche 24. Puis, la motorisation 40 de la deuxième station de travail 30 est mise en œuvre, pour porter le deuxième premier élément structurel au-dessus du tapis roulant 16, tandis que la cloche à dépression proximale 54 du bras télescopique proximal 46 du chariot proximal 35 de la deuxième station 30 est portée, elle, au-dessus du deuxième magasin de stockage droite 22.

Ainsi, lorsque les deux premiers éléments structurels solidarisés viennent s'étendre à l'aplomb des deux chariots de transfert 35, 36 de la deuxième station de travail 30, le deuxième premier élément structurel porté par le bras télescopique distal 48 est au droit des deux premiers éléments structurels solidarisés, dans une position relative prédéfinie.

Alors, dans une septième phase 80, similaire à la troisième phase 72, pour la première station de travail 28, mais incluant au surplus une opération de soudage, le deuxième premier élément structurel est appliqué sur les deux premiers éléments structurels solidarisés, et la sonotrode distale 66 qui vient en appui contre le deuxième premier élément structurel, est mise en œuvre pour venir souder localement le deuxième premier élément structurel à l'un ou l'autre des deux premiers éléments structurels solidarisés. Parallèlement, le bras télescopique proximal 46 du chariot de transfert proximal 35 de la deuxième station 30 est activé de manière à saisir un deuxième second élément structurel contenu dans le deuxième magasin de stockage droite 22.

Puis dans une huitième phase 82, correspondant à la quatrième phase 74, pour la première station de travail 28, la motorisation 40 de la deuxième station de travail 30 est à nouveau mise en œuvre. Le deuxième second élément structurel est alors porté au droit des deuxième premier et deux premiers éléments structurels solidaires les uns des autres.

Dans une neuvième phase 84, analogue à la cinquième phase pour la première station de travail 28, incluant également deux étapes simultanées, l'une de dépose et de fixation, l'autre de saisie, toutes deux décomposées en sous étapes, le deuxième second élément structurel est d'une part appliqué sur les deuxième premier et deux premiers éléments structurels, dans une position relative prédéfinie, et, simultanément, la sonotrode proximale 56 qui vient en appui contre le deuxième second élément structurel, est mise en œuvre pour le souder localement à l'un ou l'autre des deuxième premier et deux premiers éléments structurels. Et d'autre part, simultanément, le bras télescopique distal 48 est venu saisir un deuxième premier élément structurel contenu dans le deuxième magasin de stockage gauche 24.

On obtient de la sorte une préforme constituée de quatre éléments structurels faits d'un composite thermoplastique, solidaires les uns des autres.

Bien entendu, simultanément au déroulement des phases septième 80, huitième 82 et neuvième 84, la première station de travail 28 a été mise en œuvre selon les phases première 68 à cinquième 76.

Conséquemment, et selon une dixième phase 86, le tapis roulant 16 est de nouveau entraîné en translation selon la direction de cheminement D, et dudit pas donné, de manière à porter vers la sortie 14 la préforme ainsi constituée et également, à venir porter deux nouveaux premiers éléments structurels solidaires l'un de l'autre, à l'aplomb des deux chariots de transfert 35, 36 de la deuxième station de travail 30.

Ainsi, on réalise en continu des préformes composites thermoplastiques, comprenant ici quatre éléments structurels au rythme d'un pas d'avancement du tapis roulants 16. Chaque préforme composite thermoplastique est ensuite mise en place dans une presse afin d'être thermoformée.

Aussi, on comprend que le nombre de stations de travail peut être supérieur à deux lorsque les préformes composites sont plus complexes et intègres d'autres éléments structurels.

Au surplus, grâce à l'installation de réalisation selon l'invention, il est possible de mettre en œuvre des éléments structurels en matériaux composites thermoplastiques de différentes natures, selon différentes orientations et également avec différents niveaux d'épaisseur. Les préformes obtenus grâce à cette installation, peuvent être obtenus avec moins de matériau.

Grâce à l'installation conforme à l'invention, il est prévu de réaliser des préformes composites thermoplastiques, à grande cadence, par exemple une par minute, avec une bonne reproductibilité.

## Revendications

1. Installation de réalisation de préformes composites thermoplastiques destinées à être thermoformées, ladite installation comprenant, d'une part un support mobile (16) et une pluralité de magasins de stockage (18, 20, 22, 24) situés au voisinage dudit support mobile (16) pour pouvoir stocker respectivement une pluralité d'éléments structurels en matériau composite thermoplastique, et d'autre part, des dispositifs de transfert et de liaison (35, 36, 46, 48) pour pouvoir transférer lesdits éléments structurels respectivement des magasins de stockage (18, 20, 22, 24) de ladite pluralité de magasins de stockage vers ledit support mobile (16) et pour pouvoir lier ensemble lesdits éléments structurels sur ledit support mobile de manière à réaliser une préforme, ledit support mobile (16) étant entrainé séquentiellement en translation selon une direction de cheminement D, tandis que lesdits magasins de stockage (18, 20, 22, 24) sont appariés et agencés latéralement par rapport audit support mobile (16), les magasins de chacune des paires de magasins étant opposés l'un de l'autre par rapport audit support mobile (16) ;
**caractérisée en ce que** lesdits dispositifs de transfert et de liaison (35, 36, 46, 48) comportent des chariots de transfert (35, 36) liés mécaniquement deux à deux et mobiles en translation selon une direction de transfert sensiblement perpendiculaire à ladite direction de cheminement D pour pouvoir transférer séquentiellement lesdits éléments structurels sur ledit support mobile selon ladite direction de transfert.

2. Installation selon la revendication 1, **caractérisée en ce que** lesdits dispositifs de transfert et de liaison (35, 36, 46, 48) comportent une pluralité d'organes de préhension (54, 64) desdits éléments structurels.

3. Installation selon la revendication 2, **caractérisée en ce que** les organes de préhension comprennent respectivement une cloche à dépression.

4. Installation selon l'une quelconque des revendications 1 à 3, **caractérisée en ce que** lesdits dispositifs de transfert et de liaison comportent une pluralité d'organes de soudage (56, 66) pour lier ensemble lesdits éléments structurels.

5. Installation selon la revendication 4, **caractérisée en ce que** les organes de soudage comprennent un transducteur et une sonotrode.

6. Installation selon l'une quelconque des revendications 1 à 5, **caractérisée en ce que** lesdits dispositifs de transfert et de liaison comportent en outre un système bielle/manivelle (42, 44) pour pouvoir entraîner lesdits chariots de transfert (35, 36) en translation.

7. Installation selon l'une quelconque des revendications 1 à 6, **caractérisée en ce qu'**il comprend des bras (46, 48) respectivement installés sur lesdits chariots de transfert.

## Patentansprüche

1. Eine Anlage zur Herstellung von Vorformlingen aus thermoplastischem Verbundwerkstoff, die dazu bestimmt sind, warmgeformt zu werden, wobei die genannte Anlage einerseits einen beweglichen Träger (16) und eine Vielzahl von Lagermagazinen (18, 20, 22, 24) umfasst, die in der Nähe des genannten beweglichen Trägers (16) angeordnet sind, um jeweils eine Vielzahl von Strukturelementen aus thermoplastischem Verbundwerkstoff lagern zu können, und andererseits Transfer- und Verbindungsvorrichtungen (35, 36, 46, 48) umfasst, um die genannten Strukturelemente jeweils ausgehend von den Lagermagazinen (18, 20, 22, 24) der genannten Vielzahl von Lagermagazinen, hin zum genannten beweglichen Träger (16) transferieren zu können, und um die genannten Strukturelemente auf dem genannten beweglichen Träger miteinander zu verbinden, sodass ein Vorformling hergestellt wird, wobei der genannte bewegliche Träger (16) sequentiell translatorisch in einer Bewegungsrichtung D angetrieben wird, während die genannten Lagermagazine (18, 20, 22, 24) mit dem beweglichen Träger (16) gepaart und seitlich in Bezug auf diesen angeordnet sind, wobei die Magazine jedes der Magazinpaare in Bezug auf den genannten beweglichen Träger (16) einander gegenüberliegen;
**dadurch gekennzeichnet, dass** die genannten Transfer- und Verbindungsvorrichtungen (35, 36, 46, 48) Transferschlitten (35, 36) umfassen, die mechanisch paarweise miteinander verbunden sind und entlang einer Transferrichtung, die im Wesentlichen senkrecht zur genannten Bewegungsrichtung D verläuft, translatorisch beweglich sind, um die genannten Strukturelemente sequentiell auf dem genannten beweglichen Träger entlang der genannten Transferrichtung transferieren zu können.

2. Die Anlage nach Anspruch 1, **dadurch gekennzeichnet, dass** die genannten Transfer- und Verbindungsvorrichtungen (35, 36, 46, 48) eine Vielzahl von Elementen zum Greifen (54, 64) der genannten Strukturelemente umfassen.

3. Die Anlage nach Anspruch 2, **dadurch gekennzeichnet, dass** die Greifelemente jeweils eine Saugglocke umfassen.

4. Die Anlage nach irgendeinem der Ansprüche von 1 bis 3, **dadurch gekennzeichnet, dass** die genannten Transfer- und Verbindungsvorrichtungen eine Vielzahl von Schweißelementen (56, 66) umfassen, um die genannten Strukturelemente miteinander zu verbinden.

5. Die Anlage nach Anspruch 4, **dadurch gekennzeichnet, dass** die Schweißelemente einen Wandler und eine Sonotrode umfassen.

6. Die Anlage nach irgendeinem der Ansprüche von 1 bis 5, **dadurch gekennzeichnet, dass** die genannten Transfer- und Verbindungsvorrichtungen ferner ein Schubkurbelgetriebe (42, 44) umfassen, um die genannten Transferschlitten (35, 36) in Translation antreiben zu können.

7. Die Anlage nach irgendeinem der Ansprüche von 1 bis 6, **dadurch gekennzeichnet, dass** sie Arme (46, 48) umfasst, die jeweils auf den genannten Transferschlitten installiert sind.

## Claims

1. An installation for production of thermoplastic composite preforms intended to be thermoformed, said installation comprising, on the one hand, a mobile support (16) and a plurality of storage areas (18, 20, 22, 24) situated in the vicinity of said mobile support (16) to be able to store a respective plurality of thermoplastic composite material structural elements and, on the other hand, transfer and connection devices (35, 36, 46, 48) to be able to transfer said structural elements from respective storage areas (18, 20, 22, 24) of said plurality of storage areas to said mobile support (16) and to connect together said structural elements on said mobile support so as to be able to produce a preform, said mobile support (16) being driven sequentially in translation in a feed direction D, while said storage areas (18, 20, 22, 24) are paired and arranged laterally relative to said mobile support (16), the storage areas of each of the pairs of storage areas being opposite to each other relatively to said mobile support (16);
**characterized in that** said transfer and connection devices (35, 36, 46, 48) include transfer carriages (35, 36) mechanically connected two by two and mobile in translation in a transfer direction substantially perpendicular to said feed direction D to be able to transfer said structural elements sequentially onto said mobile support in said transfer direction.

2. The installation as claimed in claim 1, **characterized in that** said transfer and connection devices (35, 36, 46, 48) comprise a plurality of members (54, 64) for holding said structural elements.

3. The installation as claimed in claim 2, **characterized in that** the holding members comprise a respective suction cup.

4. The installation as claimed in any one of claims 1 to 3, **characterized in that** said transfer and connection devices include a plurality of welding members (56, 66) for connecting together said structural elements.

5. The installation as claimed in claim 4, **characterized in that** the welding members comprises a transducer and a sonotrode.

6. The installation as claimed in any one of claims 1 to 5, **characterized in that** said transfer and connection devices further include a link/crank system (42, 44) to be able to drive said transfer carriages (35, 36) in translation.

7. The installation as claimed in any one of claims 1 to 6, **characterized in that** it comprises respective arms (46, 48) installed on said transfer carriages.
